# EUROPÄISCHE PATENTANMELDUNG

(11) **EP 4 325 106 A1**
(43) Veröffentlichungstag der Anmeldung: **21.02.2024**
(21) Anmeldenummer: 23187974.3
(22) Anmeldetag: 27.07.2023
(51) Int. Cl.: F16L 3/10, F16B 2/06, F16B 5/02, F16B 7/04, F16L 3/24

(54) **EINSTELLBARER ABSTANDSBEFESTIGER FÜR EINE ROHRLEITUNG UND ANORDNUNG MIT ZWEI ABSTANDSBEFESTIGERN**

(30) Priorität: 16.08.2022 DE 102022120688
(71) Anmelder: fischerwerke GmbH & Co. KG, 72178 Waldachtal (DE)
(72) Erfinder: Kosanke, Timo, 72250 Freudenstadt-Dietersweiler (DE)
(74) Vertreter: Suchy, Ulrich Johannes

(57) **Zusammenfassung**

Die Erfindung betrifft einen einstellbaren Abstandsbefestiger (2) mit zwei L-Profilen, die zahnstangenartige Halteprofilierungen (17) an aneinander anliegenden Anlageflächen (15, 16) aufweisen, um eine unbeabsichtigte Verschiebung zu vermeiden. Gummiringe als Federelemente (29) halten die Halteprofilierungen (17) in Eingriff miteinander. Durch Schwenken um einen oberen Rand eines der beiden L-Profile als Schwenkwiderlager (30) lassen sich die Halteprofilierungen (17) gegen eine Federkraft der Gummiringe außer Eingriff bringen und die L-Profile gegeneinander verschieben.

## Beschreibung

Die Erfindung betrifft einen einstellbaren Abstandsbefestiger für eine Rohrleitung mit den Merkmalen des Oberbegriffs des Anspruchs 1 und eine Anordnung mit zwei solchen Abstandsbefestigern gemäß Anspruch 15. "Einstellbar" meint eine Einstellbarkeit oder Verstellbarkeit eines Abstands der Rohrleitung von einem Befestigungsgrund oder dergleichen, an dem der Abstandsbefestiger befestigt ist.

Das Patent DE 196 53 538 C1 offenbart einen einstellbaren Abstandsbefestiger für eine Rohrleitung mit einer Rohrschelle, die mit einem längenverstellbaren Schaft abstandsveränderlich mit einem Fußteil verbunden ist, das eine Fußplatte zur Befestigung an einem Befestigungsgrund aufweist. Der Schaft weist zwei W-Profile auf, deren eines senkrecht von der Fußplatte abstehend starr an der Fußplatte und deren anderes radial von der Rohrschelle abstehend starr an der Rohrschelle angeordnet ist. Die beiden W-Profile liegen ineinander und bilden eine Schiebeführung, durch die der Abstand der Rohrschelle von der Fußplatte verstellbar ist. Mit durchgesteckten Mutter-SchraubenVerbindungen lassen sich die beiden W-Profile zusammenspannen und unverschieblich aneinander festlegen. An aneinander anliegenden Anlageflächen weisen die beiden W-Profile des Schafts des bekannten Abstandsbefestigers zahnstangenartige Halteprofilierungen auf, die eine Verschiebung der beiden W-Profile verhindern, wenn sie in Eingriff miteinander sind.

Aufgabe der Erfindung ist, einen einstellbaren Abstandsbefestiger vorzuschlagen, der einfacher einstellbar ist.

Diese Aufgabe wird durch die Merkmale des Anspruchs 1 gelöst. Die abhängigen Ansprüche haben vorteilhafte Ausgestaltungen und Weiterbildungen der im Anspruch 1 angegebenen Erfindung zum Gegenstand.

Der erfindungsgemäße, einstellbare Abstandsbefestiger ist zu einer Befestigung einer Rohrleitung in einem einstellbaren Abstand von einem Befestigungsgrund oder dergleichen vorgesehen, an dem der Abstandsbefestiger befestigt wird oder ist. Der Abstandsbefestiger weist ein Fußteil mit einem Befestigungsfuß, der zur Befestigung an dem Befestigungsgrund vorgesehen ist, und ein Halteteil, an dem die Rohrleitung befestigbar ist, auf. Zur Befestigung der Rohrleitung weist das Halteteil insbesondere eine Rohrschelle auf. Das Halteteil ist derart in einer Verstellrichtung beweglich an dem Befestigungsfuß angeordnet, dass ein Abstand des Halteteils und damit auch der Rohrleitung von dem Befestigungsfuß einstellbar ist. Das Halteteil ist in mindestens drei Verstellpositionen derart an dem Befestigungsfuß festlegbar, dass das Halteteil und damit auch die Rohrleitung in mindestens drei verschiedenen Abständen von dem Befestigungsfuß, die durch die mindestens drei Verstellpositionen festgelegt sind, von dem Befestigungsfuß an dem Fußteil festlegbar ist.

Zur Festlegung in den mindestens drei Verstellpositionen weisen das Halteteil und das Fußteil des erfindungsgemäßen Abstandsbefestigers Halteprofilierungen auf, die, wenn sie miteinander in Eingriff stehen, das Halteteil durch einen Formschluss der ineinandergreifenden Halteprofilierungen gegen eine Bewegung in der Verstellrichtung am Fußteil halten, wobei die Halteprofilierungen die mindestens drei Verstellpositionen der Abstandsverstellung des erfindungsgemäßen Abstandsbefestigers festlegen. Um das Halteteil in Bezug zum Fußteil in der Verstellrichtung bewegen zu können, müssen die Halteprofilierungen außer Eingriff voneinander gebracht werden.

Die Erfindung sieht ein Federelement vor, das das Fußteil und das Halteteil im Sinne eines Ineingriffbringens und Ineingriffhaltens beaufschlagen. Durch die Halteprofilierungen und das Federelement, das die Halteprofilierungen in Eingriff miteinander hält, ist das Halteteil zumindest provisorisch in einer der mindestens drei Verstellpositionen gegen eine Bewegung in der Verschieberichtung am Fußteil gehalten. Zum Verstellen werden die Halteprofilierungen gegen eine Federkraft des Federelements außer Eingriff voneinander gebracht. Nach dem Verstellen werden das Halteteil und das Fußteil wieder losgelassen, woraufhin das Federelement die Halteprofilierungen in einer der mindestens drei Verstellpositionen in Eingriff miteinander bringt, woraufhin das Halteteil ohne weiteres Zutun in der eingestellten Verstellpositionen gegen eine Bewegung in der Verstellrichtung am Fußteil gehalten ist.

Die Verstellung und Abstandseinstellung des erfindungsgemäßen Abstandsbefestigers ist vereinfacht, weil nach einer Einstellung eines Abstands keine weiteren Handgriffe und kein Werkzeug zu der zumindest provisorischen Festlegung des Halteteils gegen die Bewegung in der Verstellrichtung notwendig sind.

Das Fußteil und das Halteteil weisen bei einer Ausgestaltung der Erfindung Anlageflächen auf, die parallel zu der Verstellrichtung verlaufen, mit denen aneinander anliegend das Fußteil und das Halteteil zum Halten der Rohrleitung angeordnet werden oder sind. Die Halteprofilierungen sind insbesondere an den Anlageflächen des Fußteils und des Halteteils vorgesehen derart, dass die Halteprofilierungen in Eingriff miteinander sind, wenn das Fußteil und das Halteteil mit ihren Anlageflächen aneinander anliegend angeordnet sind, wobei die in Eingriff miteinander stehenden Halteprofilierungen das Fußteil und das Halteteil gegen eine Bewegung in der Verstellrichtung gegeneinanderhalten.

Um die Halteprofilierungen leichter außer Eingriff bringen und das Fußteil und das Halteteil in der Verstellrichtung gegeneinander bewegen zu können, weist das Fußteil und/oder das Halteteil bei einer Ausgestaltung der Erfindung ein Schwenkwiderlager auf, um dessen Schwenkachse das Halteteil und/oder das Fußteil schwenkbar ist, wenn es am Schwenkwiderlager anliegt. Das Schwenkwiderlager ist beispielweise eine Kante, ein Rand oder dergleichen, um die das Fußteil und/oder das Halteteil schwenkbar ist, wenn es an der Kante, dem Rand oder dergleichen anliegt. Das Schwenkwiderlager wirkt bezüglich des Schwenkens wie ein Schwenklager, wenn das Fußteil oder das Halteteil an ihm anliegt. Anders als ein Schwenklager hält das Schwenkwiderlager das Fußteil und/oder das Halteteil weder gegen ein Abheben vom Schwenkwiderlager noch gegen eine translatorische Bewegung. Das Schwenkwiderlager ermöglicht die Bewegung des Fußteils und des Halteteils gegeneinander, wenn die Halteprofilierungen außer Eingriff voneinander sind. Die Schwenkachse des Schwenkwiderlagers verläuft vorzugsweise quer, insbesondere orthogonal, zu der Verstellrichtung. Das Schwenkwiderlager weist einen Abstand in der Verstellrichtung von der Halteprofilierung des Fußteils oder des Halteteils auf. Dadurch lassen sich die Halteprofilierungen außer Eingriff voneinander bringen, indem das Halteteil am Schwenkwiderlager des Fußteils anliegend oder das Fußteil am Schwenkwiderlager des Halteteils anliegend um die Schwenkachse des Schwenkwiderlagers geschwenkt wird. Die Halteprofilierungen müssen gegen die Federkraft des Federelements außer Eingriff voneinander gebracht werden, was die Ausgestaltung mit dem Schwenkwiderlager erleichtert, weil das Fußteil und/oder das Halteteil zum Schwenken als Hebel benutzt werden kann. Durch den Abstand der Halteprofilierung, die das Schwenkwiderlager nicht aufweist, von dem Schwenkwiderlager, lässt sich das verschwenkte Halteteil an dem Schwenkwiderlager des Fußteils oder umgekehrt das verschwenkte Fußteil an dem Schwenkwiderlager des Halteteils anliegend in der Verstellrichtung verschieben, wobei das Halteteil auf dem Schwenkwiderlager des Fußteils oder das Fußteil auf dem Schwenkwiderlager des Halteteils gleitet.

Eine Ausgestaltung der Erfindung sieht ein Zugfederelement als Federelement vor, welches das Fußteil und das Halteteil im Sinne des Ineingriffbringens und Ineingriffhaltens ihrer Halteprofilierungen beaufschlagt. Insbesondere ist das Zugfederelement ein elastischer Ring, beispielsweise ein Gummiring, der einander überdeckende Öffnungen im Fußteil und im Halteteil durchgreift und das Fußteil und das Halteteil elastisch zueinander zieht derart, dass ihre Anlageflächen aneinander anliegen und die Halteprofilierungen in Eingriff miteinander sind. Diese Ausgestaltung ermöglicht ein preisgünstiges und einfaches Federelement. Insbesondere berührt der elastische Ring oder allgemein das Zugfederelement nicht die Öffnungen im Fußteil und im Halteteil, die es durchgreift, was eine Beschädigung des Zugfederelements durch ein Reiben an einem Rand der Öffnungen bei einer Relativbewegung vermeidet. Es können auch mehrere elastische Ringe als Zugfederelement vorhanden sein.

Eine Weiterbildung sieht eine Ausbildung der Öffnung im Fußteil und/oder im Halteteil, die das Zugfederelement durchgreift, als Langloch vor, welche sich in der Verstellrichtung erstreckt. Das ermöglicht die Bewegung des Fußteils und des Halteteils gegeneinander in der Verstellrichtung. Dieses Langloch wird zur Unterscheidung von weiteren Langlöchern nachfolgend auch als erstes Langloch bezeichnet werden.

Eine Weiterbildung sieht ein zweites, zu dem ersten Langloch, das von dem Federelement durchgriffen wird, paralleles Langloch in dem Fußteil und/oder dem Halteteil vor, das von einem ersten Schraubverbinder durchgriffen wird, mit dem das Fußteil und das Halteteil gegeneinander spannbar sind derart, dass ihre Halteprofilierungen ineinandergreifen und das Halteteil starr am Fußteil festgelegt ist. Der Schraubverbinder ist ein Bauelement oder eine Baugruppe, das/die ein Gewinde aufweist und das/die durch eine Drehbewegung um eine Achse eine translatorische Bewegung in Richtung der Achse erzeugt und dadurch das Spannen des Fußteils und des Halteteils gegeneinander ermöglicht. Beispielsweise weist der Schraubverbinder eine Schraube und eine aufgeschraubte Mutter oder eine Gewindestange mit zwei aufgeschraubten Muttern auf. Vorzugsweise sind zwei oder auch mehr zweite Langlöcher beiderseits des ersten Langlochs vorgesehen, um das Fußteil und das Halteteil auf beiden Seiten des ersten Langlochs, vorzugsweise symmetrisch gegeneinander zu spannen. Es können auch umgekehrt mehrere erste Langlöcher beiderseits eines zweiten Langlochs vorgesehen sein.

Zur Befestigung des insbesondere als Zugfederelement ausgebildeten Federelements am Fußteil und/oder am Halteteil sieht eine Ausgestaltung der Erfindung einen Querriegel auf einer dem Halteteil abgewandten Außenseite des Fußteils und/oder auf einer dem Fußteil abgewandten Außenseite des Halteteils vor. Der Querriegel erstreckt sich quer über das erste Langloch, welches von dem Federelement durchgriffen wird. Der Querriegel ist eine Art Widerlager, an dem das Federelement einhängbar oder in anderer Weise befestigbar ist und das eine Federkraft des Federelements auf das Fußteil oder das Halteteil überträgt. Es muss keine an einen Riegel erinnernde Form aufweisen. Der Querriegel bildet eine einfache Befestigungsmöglichkeit für das Federelement.

Eine Weiterbildung der Erfindung sieht ein Loch in dem Querriegel vor, welches das zweite Langloch in dem Fußteil und/oder dem Halteteil überdeckt. Der erste Schraubverbinder, mit dem das Fußteil und das Halteteil starr zusammen spannbar sind, durchgreift das Loch im Querriegel und das zweite Langloch im Fußteil und/oder im Halteteil.

Eine Weiterbildung der Erfindung sieht ein Widerlager für eine Mutter oder einen als Mehrkant ausgebildeten Schraubenkopf, die/den der erste Schraubverbinder bei dieser Ausführung der Erfindung aufweist, als Drehsicherung für die Mehrkantmutter oder den Mehrkantschraubenkopf an dem Querriegel vor. Die Mutter oder der Mehrkantschraubenkopf weist beispielsweise einen Vierkant oder einen Sechskant auf. Die Mutter kann beispielsweise auch rechteckig oder rautenförmig sein. Das Widerlager weist einen solchen Abstand von dem Loch im Querriegel, das der erste Schraubverbinder durchgreift, auf, dass eine Ecke der Mehrkantmutter oder des Mehrkantschraubenkopfs des ersten Schraubverbinders gegen das Widerlager stößt, wenn sie/er sich dreht, und dadurch an einem Weiterdrehen gehindert wird. Das Widerlager verhindert ein Mitdrehen der Mehrkantmutter oder des Mehrkantschraubenkopfs des ersten Schraubverbinders bei einem Festziehen des ersten Schraubverbinders zum Zusammenspannen des Fußteils und des Halteteils des erfindungsgemäßen Abstandsbefestigers.

Um einen elastischen Ring als Zugfederelement zu seiner Befestigung am Querriegel einfacher um den Querriegel legen oder den Querriegel einfacher durch den elastischen Ring stecken zu können, sieht eine Ausgestaltung der Erfindung vor, dass sich der Querriegel zumindest an einem Ende verjüngt.

Das Fußteil und/oder das Halteteil weisen bei einer Ausführung der Erfindung ein L-Profil auf, dessen einer, hier als erster Schenkel bezeichneter Schenkel sich in der Verstellrichtung des Abstandsbefestigers erstreckt und die Anlagefläche mit der Halteprofilierung aufweist.

Eine Weiterbildung der Erfindung nutzt das L-Profil des Halteteils als Drehsicherung für eine Mutter oder einen als Mehrkant ausgebildeten Schraubenkopf eines zweiten Schraubverbinders, welcher der Befestigung der Rohrleitung an dem Halteteil des erfindungsgemäßen Abstandsbefestigers dient: Bei dieser Ausführung weist ein zweiter Schenkel des L-Profils des Halteteils ein Loch für den Durchtritt des zweiten Schraubverbinders auf. Ein Abstand des Lochs im zweiten Schenkel des Halteteils ist so nahe an dessen erstem Schenkel, dass der erste Schenkel ein Widerlager als Drehsicherung für die Mutter oder den Mehrkantschraubenkopf des zweiten Schraubverbinders bildet. Bei einer Drehung stößt eine Ecke der Mehrkantmutter oder des Mehrkantschraubenkopfs gegen den ersten Schenkel des L-Profils des Halteteils, der die Mutter oder den Mehrkantschraubenkopf gegen ein (Weiter-)Drehen hält. Dadurch muss die Mutter oder der Mehrkantschraubenkopf des zweiten Schraubverbinders nicht gegen Mitdrehen bei einem Festziehen des zweiten Schraubverbinders gehalten werden.

Die Halteprofilierungen weisen insbesondere komplementäre, zahnstangenartige Verzahnungen oder Wellungen auf. Wellungen eignen sich insbesondere, wenn sie durch Prägen oder einen anderen Umformprozess an beispielsweise einem Blech hergestellt werden. "Komplemetär" bedeutet, dass die beiden Halteprofile so gestaltet sind, dass sie vergleichbar mit Verzahnungen von Zahnstangen in einen formschlüssigen Eingriff miteinander gebracht werden können. Die Halteprofile müssen dazu nicht gegengleich sondern lediglich so ausgebildet sein, dass der formschlüssige Eingriff ineinander möglich ist. Der Formschluss wirkt in der Verstellrichtung, das heißt, er sperrt gegen eine Bewegung in der Verstellrichtung.

Gegenstand des Anspruchs 15 ist eine einstellbare Abstandsbefestigung einer Rohrleitung mit zwei Abstandsbefestigern der vorstehend erläuterten Art. Die beiden Abstandsbefestiger sind in einem Abstand voneinander angeordnet und halten eine an ihren Halteteilen befestigte Rohrschelle an zwei voneinander beabstandeten, insbesondere gegenüberliegenden Umfangstellen der Rohrschelle. In der Rohrschelle wird die Rohrleitung befestigt. Die Befestigungsfüße der beiden Abstandsbefestiger werden insbesondere in einer gemeinsamen Befestigungsebene angeordnet, von der die beiden Abstandsbefestiger abstehen. Ein Abstand der Rohrschelle von der Befestigungsebene wird durch eine Bewegung der beiden Halteteile an den Fußteilen in der Verstellrichtung eingestellt. Bei der Einstellung des Abstands ist die Rohrschelle vorzugsweise noch nicht an beiden Halteteilen befestigt, um deren Halteprofilierungen außer Eingriff bringen zu können.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: eine erfindungsgemäße Anordnung mit zwei einstellbaren Abstandsbefestigern gemäß der Erfindung in einer perspektivischen Darstellung;
- Figur 2: einen der beiden Abstandsbefestiger aus Figur 1 in einer perspektivischen Darstellung mit Blick auf eine Außenseite des Abstandsbefestigers;
- Figur 3: den Abstandsbefestiger aus Figur 2 in einer perspektivischen Darstellung mit Blick auf eine Innenseite des Abstandsbefestigers;
- Figur 4: eine Explosionsdarstellung/Einzelteildarstellung des Abstandsbefestigers aus den Figuren 1 bis 3;
- Figur 5: einen Querriegel des Abstandsbefestigers aus den Figuren 2 bis 4 in einer perspektivischen Darstellung; und
- Figur 6: eine vergrößerte Einzelheit gemäß Pfeil VI in Figur 1 in Ansicht.

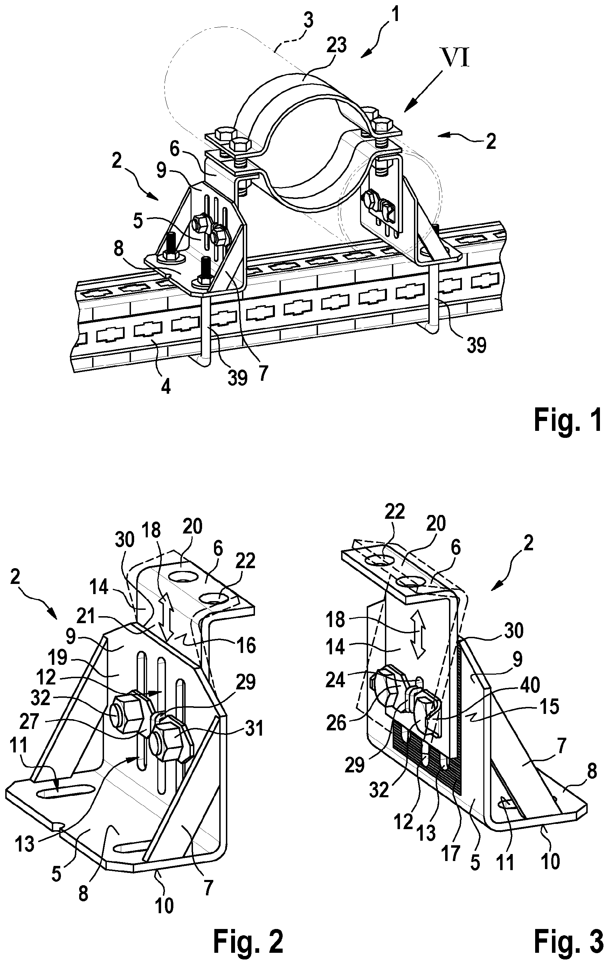

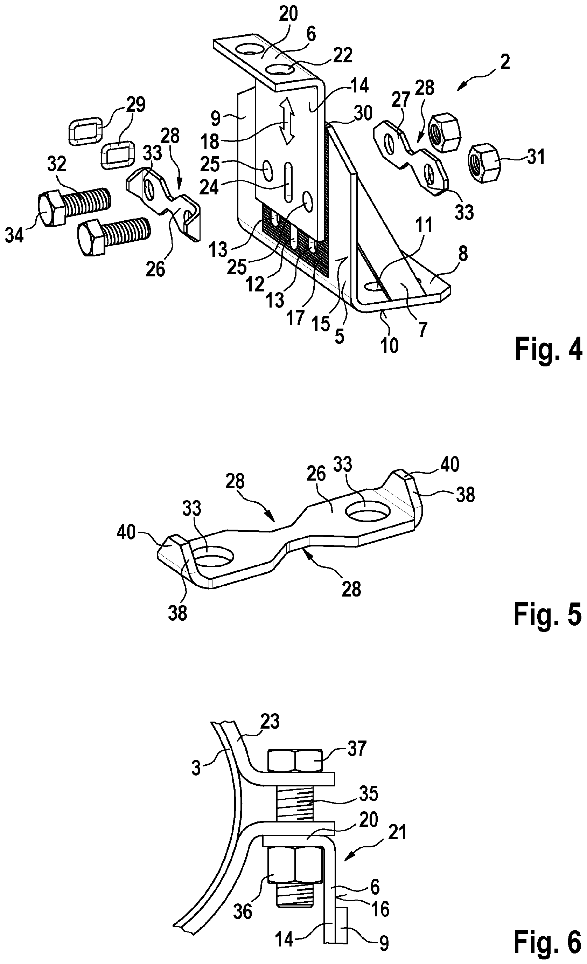

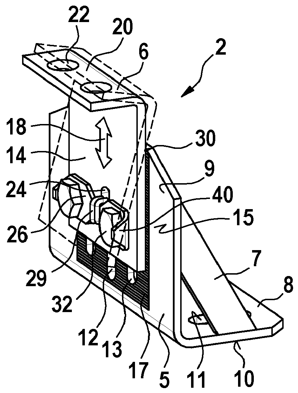

Die in Figur 1 dargestellte, erfindungsgemäße Anordnung 1 weist zwei identische Abstandsbefestiger 2 auf, die mit unterschiedlichen Blickrichtungen in den Figuren 2 und 3 dargestellt sind. Figur 4 zeigt die Einzelteile der Abstandsbefestiger 2. Die Abstandsbefestiger 2 beziehungsweise die Anordnung 1 sind zu einer Befestigung einer Rohrleitung 3 in einem verstellbaren beziehungsweise einstellbaren Abstand von einem Befestigungsgrund 4 vorgesehen. Der Befestigungsgrund 4 ist beispielsweise eine Wand, ein Boden, eine Decke oder ein Pfosten eines Gebäudes oder eines anderen Bauwerks. Im Ausführungsbeispiel sind die Abstandsbefestiger 2 mit U-Bügeln an einer Montageschiene als Befestigungsgrund 4 befestigt.

Wie in den Figuren 2 und 3 zu sehen ist, weist der Abstandsbefestiger 2 zwei L-Profile auf, von denen eines ein Fußteil 5 und ein anderes ein Halteteil 6 des Abstandsbefestigers 2 bildet. Das L-Profil des Fußteils 5 weist zwei streifenförmige Aussteifungen 7 auf, die sich schräg von einem zu einem anderen Schenkel des L-Profils des Fußteils 5 erstrecken.

Einer der beiden Schenkel des L-Profils des Fußteils 5 bildet einen Befestigungsfuß 8 des Fußteils 5, dessen Unterseite, die einem anderen der beiden Schenkel 9 abgewandt ist, eine Befestigungsfläche 10 des Befestigungsfußes 8 und des Fußteils 5 bildet. Der Befestigungsfuß 8 weist zwei Langlöcher als Befestigungslöcher 11 zur Befestigung des Fußteils 5 durch beispielsweise nicht dargestellte Verschraubungen oder die beiden U-Bügel 39 in Figur 1 mit dem Befestigungsgrund 4 auf.

Der andere der beiden Schenkel 9 des Fußteils 5 weist drei zueinander parallele und zu dem Befestigungsfuß 8 senkrechte Langlöcher 12, 13 auf, deren mittleres Langloch 12 hier als erstes Langloch 12 und deren beide äußeren Langlöcher 13 hier als zweite Langlöcher 13 bezeichnet werden.

Ein erster Schenkel 14 des L-Profils des Halteteils 6 des erfindungsgemäßen Abstandsbefestigers 2 ist an dem anderen Schenkel 9 des Fußteils 5 anliegend angeordnet, wobei einander zugewandte und aneinander anliegende Seiten des anderen Schenkels 9 des Fußteils 5 und des ersten Schenkels 14 des Halteteils 6 hier als Anlageflächen 15, 16 des Fußteils 5 und des Halteteils 6 bezeichnet werden.

Die Anlageflächen 15, 16 des Fußteils 5 und des Halteteils 6 weisen komplementäre, zahnstangenartige Verzahnungen auf, die quer zu den Schenkeln 9, 14 beziehungsweise parallel zu Scheiteln der L-Profile des Fußteils 5 und des Halteteils 6 verlaufen und die Halteprofilierungen 17 bilden. Wenn die Anlageflächen 15, 16 des Fußteils 5 und des Halteteils 6 aneinander anliegen und die Halteprofilierungen 17 ineinander greifen, sperren die Halteprofilierungen 17 das Halteteil 6 durch Formschluss gegen eine Bewegung in Bezug auf das Fußteil 5 in einer Längsrichtung des anderen Schenkels 9 des Fußteils 5 und in einer Längsrichtung des ersten Schenkels 14 des Halteteils 6 beziehungsweise gegen eine Bewegung senkrecht zu den Scheiteln der L-Profile des Fußteils 5 und des Halteteils 6 beziehungsweise senkrecht zum Befestigungsfuß 8 beziehungsweise der Befestigungsfläche 10 des Fußteils 5. Die Längsrichtung des ersten Schenkels 9 des Fußteils 5 und des ersten Schenkels 14 des Halteteils 6 beziehungsweise die Richtung senkrecht zu den Scheiteln der L-Profile des Fußteils 5 und des Halteteils 6 beziehungsweise senkrecht zum Befestigungsfuß 8 beziehungsweise der Befestigungsfläche 10 ist eine Verstellrichtung 18 des erfindungsgemäßen Abstandsbefestigers 2 beziehungsweise eine Verstellrichtung 18 des Halteteils 6 in Bezug auf das Fußteil 5 und in Bezug auf den Befestigungsfuß 8. Die Verstellrichtung 18 ist in Figuren 2 und 3 mit einem Doppelpfeil dargestellt, der keine Element des Halteteils 6 ist.

Durch ein Versetzen des Halteteils 6 am Fußteil 5 um eine oder mehrere Zahnbreiten der Halteprofilierungen 17 lassen sich das Fußteil 5 und das Halteteil 6 in mehreren Verstellpositionen aneinander festlegen, die um eine Zahnbreite oder um ein ganzzahliges Vielfaches einer Zahnbreite der Halteprofilierungen 17 in der Verstellrichtung 18 versetzt zueinander sind. Die Erfindung sieht mindestens drei Verstellpositionen vor, in denen das Halteteil 6 am Fußteil 5 festlegbar ist.

Das erste und die beiden zweiten Langlöcher 12, 13 verlaufen in der Verstellrichtung 18.

Die nicht aneinander anliegenden Schenkel 20 der L-Profile des Fußteils 5 und des Halteteils 6 befinden sich an einander fernen Seiten der L-Profile und stehen in entgegengesetzten Richtungen von den aneinander anliegenden Schenkeln 9, 14 der L-Profile des Fußteils 5 des Halteteils 6 ab. Das heißt, der den Befestigungsfuß 8 bildende Schenkel des L-Profils des Fußteils 5 steht von einer der Anlagefläche 15 des Fußteils 5 entgegengesetzten Seite ab, die hier nachfolgend auch als Außenseite 19 des Fußteils 5 bezeichnet werden wird, und ein zweiter der beiden Schenkel 20 des L-Profils des Halteteils 6 steht von einer der Anlagefläche 16 des Halteteils 6 entgegengesetzten Seite ab, die hier nachfolgend auch als Außenseite 21 des Halteteils 6 bezeichnet werden wird.

Der zweite Schenkel des L-Profils 20 des Halteteils 6 weist ein oder mehrere, im Ausführungsbeispiel zwei Befestigungslöcher 22 zu einer Befestigung einer oder mehrerer Rohrschellen 23 auf, die Bestandteil der erfindungsgemäßen Anordnung 1 ist.

Der erste Schenkel 14 des Halteteils 6 weist nebeneinander drei Löcher 24, 25 auf, die die Langlöcher 12, 13 im anderen Schenkel 9 des Fußteils 5 überdecken (Figur 4). Ein mittleres der drei Löcher 24 ist ebenfalls ein sich in der Verstellrichtung 18 erstreckendes drittes Langloch 24, die beiden anderen Löcher 25 sind im Ausführungsbeispiel Rundlöcher 25.

Auf der Außenseite 19 des Fußteils 5 und auf der Außenseite 21 des Halteteils 6 ist jeweils ein Querriegel 26, 27 angeordnet, die im Ausführungsbeispiel als Blechstreifen mit Einschnürungen 28 in ihren Längsmitten ausgebildet sind. An den Querriegeln 26, 27 ist ein als Zugfeder wirkendes Federelement 29 eingehängt, das den ersten Schenkel 14 des Halteteils 6 gegen den anderen Schenkel 9 des Fußteils 5 derart spannt, dass die Anlageflächen 15, 16 des Fußteils 5 und des Halteteils 6 aneinander anliegen und die Halteprofilierungen 17 in Eingriff miteinander stehen. Im Ausführungsbeispiel wird das Federelement 29 von einem oder mehreren, im Ausführungsbeispiel von zwei Gummiringen oder elastischen Ringen gebildet, die das erste Langloch 12 in dem anderen Schenkel 9 des Fußteils 5 und das dritte Langloch 24 im ersten Schenkel 14 des Halteteils 6 durchgreifen und die Querriegel 26, 27 an den Einschnürungen 28 umschlingen. Durch den Eingriff der Halteprofilierungen 17 ineinander ist das Halteteil 6 durch Formschluss gegen eine Bewegung in der Verstellrichtung 18 am Fußteil 5 gehalten.

Um das Halteteil 6 in der Verstellrichtung 18 bewegen zu können, müssen der erste Schenkel 9 des Fußteils 5 und der erste Schenkel 14 des Halteteils 6 gegen eine Federkraft der das Federelement 29 bildenden Gummiringe voneinander entfernt werden derart, dass die Halteprofilierungen 17 außer Eingriff voneinander treten.

Zum Entfernen des ersten Schenkels 14 des Halteteils 6 vom ersten Schenkel 9 des Fußteils 5 kann das Halteteil 6 um einen oberen, dem Befestigungsfuß 8 fernen Rand des ersten Schenkels 9 des Fußteils 5 geschwenkt werden, wie es in Figuren 2 und 3 mit Strichlinien dargestellt ist. Dabei bildet der obere Rand des Fußteils 5 ein Schwenkwiderlager 30 für den ersten Schenkel 14 des Halteteils 6. Das Schwenken des Halteteils 6 um das Schwenkwiderlager 30, bei dem sich das Halteteil 6 am Schwenkwiderlager 30 abstützt, erleichtert das Entfernen des ersten Schenkels 14 des Halteteils 6 vom anderen Schenkel 9 des Fußteils 5 und damit das außer Eingriff bringen der Halteprofilierungen 17 voneinander gegen die Federkraft des Federelements 29, das die elastischen Ringe beziehungsweise Gummiringe bilden, die die Querriegel 26, 27 umschlingen.

Weil die das Federelement 29 bildenden Gummiringe das erste und das dritte Langloch 12, 24 berührungsfrei durchgreifen, werden sie beim Schwenken des Halteteils 6 um das Schwenkwiderlager 30 nicht durch ein Entlangstreifen an den Rändern der Langlöcher 12, 24 beschädigt.

Um das Halteteil 6 in der Verstellrichtung 18 verschieben zu können, wenn es derart verschwenkt ist, dass die Halteprofilierungen 17 außer Eingriff voneinander sind, und der erste Schenkel 14 des Halteteils 6 am Schwenkwiderlager 30 des Fußteils 5 anliegt, endet die Halteprofilierung 17 an der Anlagefläche 16 des Halteteils 6 in einem Abstand von dem Scheitel des L-Profils des Halteteils 6 derart, dass nicht die Halteprofilierung 17 sondern ein glatter Teil der Anlagefläche 16 des Halteteils 6 an dem das Schwenkwiderlager 30 bildenden oberen Rand des ersten Schenkels 9 des Fußteils 5 anliegt. Der erste Schenkel 14 des Halteteils 6 kann dadurch mit einem glatten Teil seiner Anlagefläche 16 in der Verstellrichtung 18 an dem Schwenkwiderlager 30 entlang gleitend verschoben werden.

Die ineinandergreifenden Halteprofilierungen 17 legen Verstellpositionen des Halteteils 6 am Fußteil 5 fest, die um jeweils eine Zahnbreite der die Halteprofilierungen 17 bildenden Verzahnungen in der Verstellrichtung 18 gegeneinander versetzt sind.

Um das Halteteil 6 starr am Fußteil 5 festzulegen, ohne dass sich die Halteprofilierungen 17 außer Eingriff bringen lassen, weist der erfindungsgemäße Abstandsbefestiger 2 im Ausführungsbeispiel zwei Schrauben mit aufgeschraubten Muttern 31 als ersten Schraubverbinder 32 auf, die die zweiten Langlöcher 13 im anderen Schenkel 9 des Fußteils 5, die Rundlöcher 25 im ersten Schenkel 14 des Halteteils 5 und fluchtende Löcher 33 in den Querriegeln 26, 27 derart durchgreifen, dass sich die Muttern 31 und Schraubenköpfe 34 auf Außenseiten der Querriegel 26, 27 befinden. Durch Festziehen der ersten Schraubverbinder 32 lassen sich der erste Schenkel 14 des Halteteils 6 und der andere Schenkel 9 des Fußteils 5 derart gegeneinander spannen, dass sich die Halteprofilierungen 17 nicht außer Eingriff bringen lassen. Zum außer Eingriff bringen der Halteprofilierungen 17 müssen die ersten Schraubverbinder 32 entsprechend weit gelöst sein.

Damit die Schrauben beim Festziehen oder Lösen der ersten Schraubverbinder 32 nicht mit den Muttern 31 mitdrehen, sind einander ferne Enden eines ersten Querriegels 26 der beiden Querriegel 26, 27 in einem Abstand von den Löchern 33 im ersten Querriegel 26 abgewinkelt, der etwas größer als eine Hälfte einer Schlüsselweite der Schraubenköpfe 34 der ersten Schraubverbinder 32 und kleiner als eine Hälfte eines Abstandes einander gegenüberliegender Ecken der Schraubenköpfe 34 ist. Der Querriegel 26 mit den Abwinklungen ist in Figur 5 als Einzelteil gezeichnet. Die Abwinklungen an den beiden Enden des ersten Querriegels 26 bilden Widerlager 40, gegen die eine Ecke der Schraubenköpfe 34 stößt, wenn sich die Schraubenköpfe 34 drehen. Als Drehsicherungen verhindern die Widerlager 40 des einen Querriegels 26 ein Mitdrehen der Schrauben mit den Muttern 31 beim Festziehen der ersten Schraubverbinder 32. Der zweite Querriegel 27 weist keine Widerlager auf, um die Muttern 31 drehen zu können. Die Widerlager 40 können alternativ auch auf der Seite der Muttern 31 anstatt bei den Schraubenköpfen 34 vorgesehen sein (nicht dargestellt).

Die Rohrschelle 23 ist an einander gegenüberliegenden Umfangsstellen mit zweiten Schraubverbindern 35, die die Befestigungslöcher 22 in den zweiten Schenkeln 20 des Halteteils 6 durchgreifen, am Halteteil 6 befestigt. Hier bildet der erste Schenkel 14 des Halteteils 6 ein Widerlager für die Muttern 36 oder Schraubenköpfe 37 der zweiten Schraubverbinder 35: wie in der Vergrößerung der Figur 6 zu sehen, ist der erste Schenkel 14 des Halteteils 6 so nahe an den Befestigungslöchern 22 im zweiten Schenkel 20 des Halteteils 6 angeordnet, dass bei einer Drehung eine Ecke der Mutter 36 oder des Schraubenkopfs 37 gegen den ersten Schenkel 14 des Halteteils 6 stößt und sich nicht mitdreht.

Beide Querriegel 26, 27 verjüngen sich an ihren Enden, im Ausführungsbeispiel mit Schrägen 38, am Übergang von Längsrändern zu Querrändern, um die das Zugfederelement 29 bildenden elastischen Ringe beziehungsweise Gummiringe einfacher auf die Querriegel 26, 27 auffädeln zu können. Bei dem ersten Querriegel 26 mit den Widerlagern 40 befinden sich die Verjüngung bildenden Schrägen 38 an den Widerlagern 40 beziehungsweise der erste Querriegel 26 verjüngt sich an seinen beiden Widerlagern 40.

### Bezugszeichenliste

| | | | |
|---|---|---|---|
| 1 | Anordnung | 26 | erster Querriegel |
| 2 | Abstandsbefestiger | 27 | zweiter Querriegel |
| 3 | Rohrleitung | 28 | Einschnürung |
| 4 | Befestigungsgrund | 29 | Federelement |
| 5 | Fußteil | 30 | Schwenkwiderlager |
| 6 | Halteteil | 31 | Mutter des ersten Schraubverbinders 32 |
| 7 | Aussteifung | 32 | erster Schraubverbinder |
| 8 | Befestigungsfuß | 33 | Loch (Querriegel) |
| 9 | erster Schenkel des Fußteils 5 | 34 | Schraubenkopf des ersten Schraubverbinders 32 |
| 10 | Befestigungsfläche | 35 | zweiter Schaubverbinder |
| 11 | Befestigungsloch | 36 | Mutter des zweiten Schraubverbinders 35 |
| 12 | erstes Langloch | 37 | Schraubenkopf |
| 13 | zweites Langloch | 38 | Schräge |
| 14 | erster Schenkel des Halteteils 6 | 39 | U-Bügel |
| 15 | Anlagefläche des Fußteils 5 | 40 | Widerlager des ersten Querriegels 26 |
| 16 | Anlagefläche des Halteteils 6 | | |
| 17 | Halteprofilierung | | |
| 18 | Verstellrichtung | | |
| 19 | Außenseite des Fußteils 5 | | |
| 20 | zweiter Schenkel des Halteteil 6 | | |
| 21 | Außenseite des Halteteils 6 | | |
| 22 | Befestigungsloch | | |
| 23 | Rohrschelle | | |
| 24 | drittes Langloch | | |
| 25 | Rundloch | | |

## Patentansprüche

1. Einstellbarer Abstandsbefestiger (2) für eine Rohrleitung (3), mit einem Fußteil (5), das einen Befestigungsfuß (8) zu einer Befestigung an einem Befestigungsgrund (4) aufweist, und mit einem Halteteil (6), an dem die Rohrleitung (3) befestigbar ist und das in einer Verstellrichtung (18) beweglich und in mindestens drei verschiedenen Verstellpositionen festlegbar am Befestigungsfuß (8) derart angeordnet ist, dass ein Abstand des Halteteils (6) vom Befestigungsfuß (8) einstellbar ist, wobei das Fußteil (5) und das Halteteil (6) Halteprofilierungen (17) aufweisen, die das Halteteil (6) durch formschlüssigen Eingriff der Halteprofilierungen (17) ineinander in den mindestens drei Verstellpositionen gegen eine Bewegung in der Verstellrichtung (18) am Fußteil (5) halten, wenn sie in Eingriff miteinander sind, und die zum Bewegen des Halteteils (6) in Bezug zum Fußteil (5) außer Eingriff voneinander bringbar sind, **dadurch gekennzeichnet, dass** der Abstandsbefestiger (2) ein Federelement (29) aufweist, welches das Fußteil (5) und das Halteteil (6) im Sinne eines Ineingriffbringens und Ineingriffhaltens der Halteprofilierungen (17) beaufschlagt.

2. Abstandsbefestiger (2) nach Anspruch 1, **dadurch gekennzeichnet, dass** das Fußteil (5) und das Halteteil (6) zur Verstellrichtung (18) parallele Anlageflächen (15, 16) aufweisen, die die Halteprofilierungen (17) aufweisen, die miteinander in Eingriff stehen, wenn das Fußteil (5) und das Halteteil (6) mit ihren Anlageflächen (15, 16) aneinander anliegend angeordnet sind.

3. Abstandsbefestiger (2) nach Anspruch 1 oder 2, **dadurch gekennzeichnet, dass** das Fußteil (5) und/oder das Halteteil (6) ein Schwenkwiderlager (30) in einem Abstand in der Verstellrichtung (18) von seiner Halteprofilierung (17) aufweist, um welches das Halteteil (6) und/oder das Fußteil (5) derart schwenkbar ist, dass sich die Halteprofilierungen (17) voneinander entfernen und außer Eingriff voneinander gelangen.

4. Abstandsbefestiger (2) nach einem oder mehreren der Ansprüche 1 bis 3, **dadurch gekennzeichnet, dass** der Abstandsbefestiger (2) als Federelement (29) ein Zugfederelement, insbesondere einen elastischen Ring, aufweist, das einander überdeckende Durchgangsöffnungen im Fußteil (5) und im Halteteil (6) durchgreift, insbesondere ohne das Fußteil (5) und das Halteteil (6) zu berühren.

5. Abstandsbefestiger (2) nach Anspruch 4, **dadurch gekennzeichnet, dass** mindestens eine der Durchgangsöffnungen ein sich in der Verstellrichtung (18) erstreckendes Langloch (12, 24) ist.

6. Abstandsbefestiger (2) nach Anspruch 5, **dadurch gekennzeichnet, dass** das Fußteil (5) oder das Halteteil (6) das erste Langloch (12), welches das Federelement (29) durchgreift, und ein zu dem ersten Langloch (12) paralleles zweites Langloch (13) aufweist, das von einem ersten Schraubverbinder (32) durchgriffen wird, mit dem das Fußteil (5) und das Halteteil (6) derart gegeneinander spannbar sind, dass die Halteprofilierungen (17) ineinander greifen und das Halteteil (6) starr am Fußteil (5) festgelegt ist.

7. Abstandsbefestiger (2) nach Anspruch 6, **dadurch gekennzeichnet, dass** das Fußteil (5) oder das Halteteil (6) zwei zweite Langlöcher (13) beiderseits des ersten Langlochs (12) aufweisen, die von ersten Schraubverbindern (32) durchgriffen werden, mit denen das Fußteil (5) und das Halteteil (6) derart gegeneinander spannbar sind, dass die Halteprofilierungen (17) ineinandergreifen und das Halteteil (6) starr am Fußteil (5) festgelegt ist.

8. Abstandsbefestiger (2) nach einem oder mehreren der Ansprüche 5 bis 7, **dadurch gekennzeichnet, dass** der Abstandsbefestiger (2) einen Querriegel (26, 27) auf einer dem Halteteil (6) abgewandten Außenseite (19) des Fußteils (5) und/oder auf einer dem Fußteil (5) abgewandten Außenseite (21) des Halteteils (6) aufweist, der sich quer über das erste Langloch (12) erstreckt, welches das Federelement (29) durchgreift und an dem das Federelement (29) eingehängt ist.

9. Abstandsbefestiger (2) nach Ansprüchen 6 und 8 oder 7 und 8, **dadurch gekennzeichnet, dass** der Querriegel (26, 27) ein Loch (33) aufweist, welches das zweite Langloch (13) überdeckt und das von dem ersten Schraubverbinder (32) durchgriffen wird.

10. Abstandsbefestiger (2) nach Anspruch 9, **dadurch gekennzeichnet, dass** der Querriegel (26) ein Widerlager (40) in einem radialen Abstand von dem Loch (33) als Drehsicherung für eine als Mutter (31) oder einen als Mehrkant ausgebildeten Schraubenkopf (34) des ersten Schraubverbinders (32) aufweist.

11. Abstandsbefestiger (2) nach Anspruch 9 oder 10, **dadurch gekennzeichnet, dass** sich der Querriegel (26, 27) an einem seiner Enden verjüngt.

12. Abstandsbefestiger (2) nach einem oder mehreren der Ansprüche 2 bis 11, **dadurch gekennzeichnet, dass** das Fußteil (5) und/oder das Halteteil (6) L-Profile aufweisen, deren erste Schenkel (9, 14) sich in der Verstellrichtung (18) erstrecken und die Anlageflächen (15, 16) mit den Halteprofilierungen (17) aufweisen.

13. Abstandsbefestiger (2) nach Anspruch 12, **dadurch gekennzeichnet, dass** das Halteteil (6) ein L-Profil aufweist, dessen zweiter Schenkel (20) ein Befestigungsloch (22) für einen Durchtritt eines zweiten Schraubverbinders (35) zu einer Befestigung der Rohrleitung (3) an dem Halteteil (6) in einem Abstand von dem ersten Schenkel (14) des Halteteils (6) aufweist der so groß ist, dass der zweite Schenkel (20) des Halteteils (6) ein Widerlager als Drehsicherung für eine Mutter (36) oder einen als Mehrkant ausgebildeten Schraubenkopf (37) des zweiten Schraubverbinders (35) bildet.

14. Abstandsbefestiger (2) nach einem oder mehreren der vorhergehenden Ansprüche, **dadurch gekennzeichnet, dass** die Halteprofilierungen (17) komplementäre, zahnstangenartige Verzahnungen oder Wellungen aufweisen.

15. Anordnung (1) mit zwei Abstandsbefestigern (2) nach einem oder mehreren der vorhergehenden Ansprüche, **dadurch gekennzeichnet, dass** die beiden Abstandsbefestiger (2) in einem Abstand voneinander angeordnet sind, und dass eine Rohrschelle (23) an zwei voneinander beabstandeten Umfangsstellen an den Halteteilen (6) der beiden Abstandsbefestiger (2) befestigt ist.
